# EUROPÄISCHE PATENTSCHRIFT

(11) **EP 3 350 029 B1**
(45) Veröffentlichungstag und Bekanntmachung des Hinweises auf die Patenterteilung: **25.12.2019**
(21) Anmeldenummer: 16754502.9
(22) Anmeldetag: 23.08.2016
(51) Int. Cl.: B60R 25/10, E04H 6/42, G08G 1/14

(54) **SICHERUNG EINES KRAFTFAHRZEUGS**
SECURING OF A MOTOR VEHICLE
SÉCURISATION D'UN VÉHICULE À MOTEUR

(30) Priorität: 18.09.2015 DE 102015217923
(43) Veröffentlichungstag der Anmeldung: 25.07.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/069848
(87) Internationale Veröffentlichungsnummer: WO 2017/045868

(56) Entgegenhaltungen:
- EP-A1- 2 700 546
- EP-A2- 1 361 555
- DE-A1-102012 222 562
- DE-A1-102013 222 071
- FR-A1- 2 648 595
- US-A1- 2010 156 672
- US-A1- 2012 188 100
- US-B1- 6 340 935

## Beschreibung

### Stand der Technik

Die Erfindung betrifft die Sicherung eines Kraftfahrzeugs. Insbesondere betrifft die Erfindung die Sicherung eines Kraftfahrzeugs auf einem Parkplatz.

Ein Parkplatz mit mehreren Stellplätzen ist dazu eingerichtet, ein sogenanntes AVP-Parken (Automated Valet Parking) zu unterstützen. Dabei kann der Fahrer das Kraftfahrzeug zu einer Übergabestelle bringen und dort verlassen. Das Kraftfahrzeug wird dann automatisiert und ohne Fahrereingriff zu einem der Stellplätze gesteuert und dort abgestellt. Möchte der Fahrer das Kraftfahrzeug wieder benutzen, so kann das Kraftfahrzeug, ebenfalls automatisiert, vom Stellplatz zur Übergabestelle gesteuert werden, wo der Fahrer das Kraftfahrzeug in Empfang nimmt.

Wird das Kraftfahrzeug vom Stellplatz gestohlen, so kann der Verlust des Kraftfahrzeugs erst relativ spät bemerkt werden, nämlich üblicherweise beim Versuch eines Zugriffs des Besitzers auf das Kraftfahrzeug.

DE 10 2013 222 071 A1 betrifft eine Valet-Parking-Funktion auf einem Parkplatz. Der Beginn eines Ausparkvorgangs wird so gesteuert, dass ein Kraftfahrzeug möglichst zeitgleich mit seinem Benutzer an einer Übergabestelle eintrifft.

FR 2 648 595 A1 schlägt vor, eine Parksäule zur Überwachung der Abstellzeit eines Kraftfahrzeug auf einem Stellplatz mit einem Sensor auszustatten, sodass ein Alarm ausgelöst werden kann, falls das Kraftfahrzeug während einer vorbestimmten Parkzeit vom Stellplatz entfernt wird.

EP 2 700 546 A1 zeigt eine Technik, bei der ein Kraftfahrzeug einem Abstellplatz zugeordnet werden kann. Besteht die Zuordnung und das Kraftfahrzeug wird vom Stellplatz entfernt, so kann ein Alarm ausgelöst werden.

Es ist Aufgabe der vorliegenden Erfindung, eine verbesserte Technik zur Sicherung eines Kraftfahrzeugs auf einem AVP-Parkplatz bereitzustellen. Die Erfindung löst diese Aufgabe mittels der Gegenstände der unabhängigen Ansprüche. Unteransprüche geben bevorzugte Ausführungsformen wieder.

Ein Verfahren zum Sichern eines Kraftfahrzeugs gegen unbefugtes Entfernen von einem AVP-Parkplatz umfasst Schritte des Abtastens des Parkplatzes mittels Sensoren, des Bestimmens, dass das Kraftfahrzeug im Bereich des Parkplatzes unterwegs ist, des Bestimmens, dass das Kraftfahrzeug außerhalb eines fahrerunabhängig gesteuerten Abstell- oder Abholvorgangs fährt, und des Auslösens einer Aktion.

Der zur Unterstützung eines AVP-Vorgangs ausgerüstete Parkplatz ist dazu eingerichtet, das fahrerunabhängige Führen des Kraftfahrzeugs im Bereich des Parkplatzes zu verfolgen. Dies ist üblicherweise erforderlich, um die automatisierte Führung des Kraftfahrzeugs im Bereich des Parkplatzes im Rahmen des fahrerunabhängigen Abstell- oder Abholvorgangs zu verbessern. Dadurch kann beispielsweise die Gefahr einer Kollision mit einem anderen Kraftfahrzeug oder einem Objekt auf dem Parkplatz, das vom Kraftfahrzeug aus nur sehr spät oder gar nicht erkannt werden kann, verringert werden. Durch Nutzung der bereits installierten Infrastruktur des AVP-Parkplatzes kann das Kraftfahrzeug einfach und sicher gegen unerlaubtes Entfernen gesichert werden. Das Entfernen des Kraftfahrzeugs kann sehr schnell bemerkt werden, sodass die eingeleitete Aktion wirkungsvoll sein kann.

Die Aktion umfasst das Erfassen einer Bestätigung einer für das Kraftfahrzeug oder den Parkplatz zuständigen Person. Anders ausgedrückt wird eine Rückfrage bei einer zuständigen Person eingeholt, bevor die Aktion ausgeführt wird. Wird durch die Person bestätigt, dass das Entfernen des Kraftfahrzeugs zuzulassen ist, so kann die Aktion unterdrückt werden. Wird hingegen durch die Person bestätigt, dass das Entfernen zu verhindern ist oder wird die Zustimmung zum Entfernen des Kraftfahrzeugs über länger als eine vorbestimmte Zeit- beispielsweise 10 bis 30 Sekunden - nicht gegeben, so kann die Aktion ausgelöst bzw. ausgeführt werden. Ein Fehlalarm kann dadurch verbessert vermieden werden. Trotzdem kann die verantwortliche Person zeitnah von dem Entfernungsversuch des Kraftfahrzeugs unterrichtet werden.

Grundsätzlich können wenigstens zwei verschiedene Arten von Aktionen ausgelöst werden, die auch miteinander kombiniert werden können. Die erste Art von Aktionen betrifft das Verhindern der vollständigen Entfernung des Kraftfahrzeugs, während die zweite Art Aktion die Dokumentation des Entfernungsvorgangs betrifft.

In einer Ausführungsform umfasst die Aktion das Errichten einer physischen Sperre gegen Verlassen des Parkplatzes durch das Kraftfahrzeug. Eine solche Sperre kann beispielsweise ein Schiebetor, ein Rolltor, eine aus dem Boden ausfahrbare Sperre oder eine Schranke umfassen. Das Kraftfahrzeug muss dann im Bereich des Parkplatzes verbleiben, bis abschließend geklärt ist, ob das Entfernen des Kraftfahrzeugs aus dem Bereich des Parkplatzes zuzulassen ist oder nicht.

In einer anderen Ausführungsform umfasst die Aktion das Ausgeben einer Nachricht. Die Nachricht kann insbesondere an einen Besitzer oder Fahrer des Kraftfahrzeugs, eine offizielle Stelle wie die Polizei, an einen Wachdienst oder ein Betreuungspersonal des Parkplatzes ausgegeben werden. Dadurch kann eine verantwortliche Person schnell zur Handlung aufgefordert werden und gegebenenfalls rechtzeitig eingreifen um den nicht autorisierten Entfernungsvorgang zu überprüfen.

Bevorzugterweise werden im Bereich des Parkplatzes zusätzliche Informationen erfasst und über einen vorbestimmten zurückliegenden Zeitraum aufgezeichnet. Dabei kann die oben erwähnte Nachricht die zusätzlichen Informationen umfassen. Diese zusätzlichen Informationen können insbesondere Kamera- oder Videobilder aus dem Bereich des Parkplatzes umfassen. Ferner können weitere Informationen, die beispielsweise im Rahmen eines Abstellvorgangs des Kraftfahrzeugs gesammelt wurden, erhoben bzw. gespeichert werden. Diese Informationen können etwa ein Kennzeichen des Kraftfahrzeugs, eine Ankunftszeit, eine Entfernungszeit, jeweils in Datum und Uhrzeit, oder andere Informationen umfassen. Die Informationen können auch verarbeitet oder vorverarbeitet sein, zum Beispiel indem eine Person, die das Kraftfahrzeug steuert, aus dem Kamera- oder Videobild vergrößert oder extrahiert dargestellt wird.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Ein Parksystem umfasst einen Parkplatz mit wenigstens einem Stellplatz zum Abstellen eines Kraftfahrzeugs, Sensoren zur Abtastung des Parkplatzes und eine Verarbeitungseinrichtung zur Unterstützung eines fahrerunabhängigen Abstell- oder Abholvorgangs des Kraftfahrzeugs. Dabei ist die Verarbeitungseinrichtung dazu eingerichtet, zu bestimmen, dass ein mittels der Sensoren auf dem Parkplatz erfasstes Kraftfahrzeug außerhalb eines fahrerunabhängig gesteuerten Abstell- oder Abholvorgangs fährt, und daraufhin eine Aktion auszulösen. Der Parkplatz ist dazu eingerichtet, ein fahrerunabhängiges Führen des Kraftfahrzeugs zwischen einer Übergabestelle und einem Stellplatz im Rahmen des fahrerunabhängigen Abstell- oder Abholvorgangs zu unterstützen. Die Aktion umfasst das Erfassen einer Bestätigung einer für das Kraftfahrzeug oder den Parkplatz zuständigen Person.

Die Verarbeitungseinrichtung ist bevorzugterweise dazu eingerichtet, das oben beschriebene Verfahren durchzuführen. Dazu kann die Verarbeitungseinrichtung einen programmierbaren Mikrocomputer umfassen, auf dem das obengenannte Computerprogrammprodukt abläuft.

Die Erfindung wird nun mit Bezug auf die beigefügten Figuren genauer beschrieben, in denen:
- Fig. 1: ein System mit einem AVP-Parkplatz und einem Kraftfahrzeug; und
- Fig. 2: ein Ablaufdiagramm eines Verfahrens zum Sichern des Kraftfahrzeugs auf dem Parkplatz von Fig. 1
darstellt.

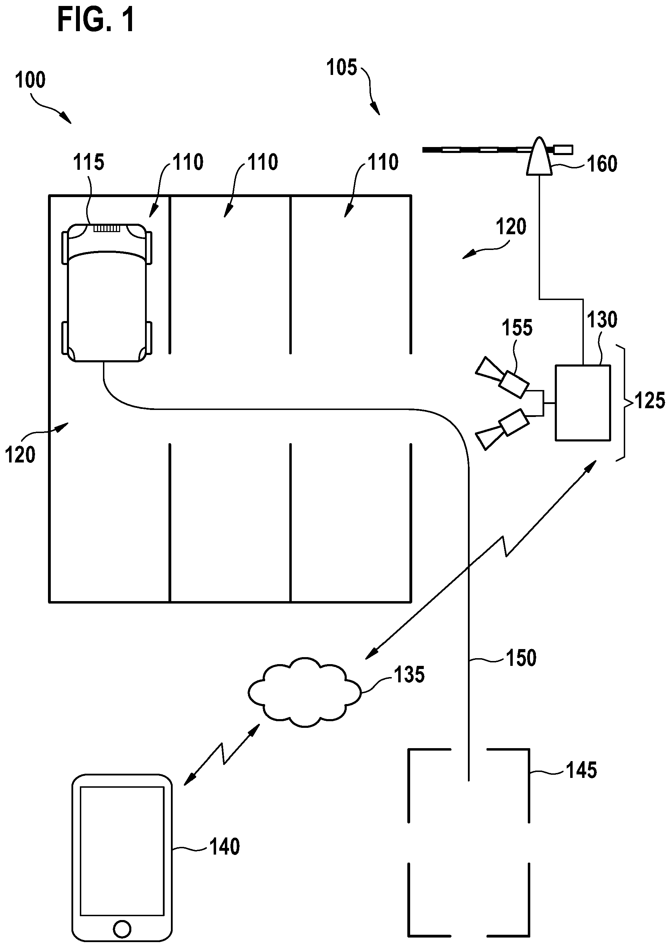

Figur 1 zeigt eine System 100 mit einem Parkplatz 105. Der Parkplatz 105 kann unter freiem Himmel oder in einem Parkhaus liegen und umfasst eine Anzahl von Stellplätzen 110, jeweils zum Abstellen eines Kraftfahrzeugs 115, und üblicherweise eine oder mehrere Verkehrsflächen 120, über die zu den Stellplätzen 110 gelangt werden kann.

Üblicherweise ist eine Verwaltungseinrichtung 125 mit einer Verarbeitungseinrichtung 130 vorgesehen, um das Abstellen oder Abholen von Kraftfahrzeugen 115 auf dem Parkplatz 105 zu organisieren oder zu steuern. Mittels der Verwaltungseinrichtung 125 können beispielsweise eine Reservierung oder eine Abrechnung eines Abstellvorgangs durchgeführt werden. Bevorzugterweise ist die Verarbeitungseinrichtung 130 mit einem Netzwerk 135 verbunden, um beispielsweise eine Reservierung oder einen Abrechnungsvorgang mittels eines entfernten Geräts 140 durchführen zu können. Das Netzwerk 135 kann teilweise drahtlos ausgeführt sein. Insbesondere kann ein Teil des Internets oder eines Mobilnetzes für das Netzwerk 135 genutzt werden. Das Gerät 140 kann beispielsweise ein Computer oder ein mobiles Gerät, insbesondere ein sogenanntes Smartphone oder einen Tablet Computer, umfassen.

Der Parkplatz 105 ist dazu eingerichtet, einen sogenannten AVP-Vorgang (Automated Valet Parking) zu unterstützen. Dazu ist eine Übergabestelle 145 vorgesehen, an der ein Kraftfahrzeug 115 abgestellt oder in Empfang genommen werden kann. Das Bewegen des Kraftfahrzeugs 115 zwischen der Übergabestelle 145 und einem Stellplatz 110 auf einer Strecke 150 kann dabei fahrerunabhängig gesteuert werden. Dazu umfasst die Verwaltungseinrichtung 125 üblicherweise eine Anzahl Sensoren 155 zum Abtasten des Parkplatzes 105, insbesondere der Verkehrsflächen 120 oder der Stellplätze 110.

In unterschiedlichen Ausführungsformen erfolgt die Steuerung des Kraftfahrzeugs 115 überwiegend durch die Verarbeitungseinrichtung 130, überwiegend durch eine Verarbeitungseinrichtung an Bord des Kraftfahrzeugs 115 oder in Kooperation zwischen den beiden Verarbeitungseinrichtungen. Dabei können Informationen zwischen dem Kraftfahrzeug 115 und der Verwaltungseinrichtung 125 ausgetauscht werden, üblicherweise mittels eines lokalen drahtlosen Netzwerks oder über das Netzwerk 135. Die Sensoren 155 können insbesondere eine Kamera, eine Videokamera, einen Radarsensor, einen Lidarsensor, eine Lichtschranke, einen kapazitiven oder induktiven Näherungssensor, eine Induktionsschleife, einen Ultraschallsensor oder einen praktisch beliebigen anderen Sensor umfassen, der dazu beitragen kann, eine Steuerung des Kraftfahrzeugs 115 im Bereich des Parkplatzes 105 zu unterstützen und insbesondere einen Bereich um das Kraftfahrzeug 115 abzutasten.

Die Verwaltungseinrichtung 125 ist dazu eingerichtet, den Parkplatz 105 zu überwachen und insbesondere sich im Bereich des Parkplatzes 105 bewegende Kraftfahrzeuge 115 zu erfassen. Es wird vorgeschlagen, diese Funktionalität für eine Sicherung eines Kraftfahrzeugs 115 gegen unbefugtes Entfernen vom Parkplatz 105 bzw. einem Stellplatz 110 zu verwenden. Sollte beispielsweise eine Person versuchen, ein auf einem Stellplatz 110 abgestelltes Kraftfahrzeug 115 zu entwenden, so muss sie es durch einen mittels der Sensoren 155 überwachten Bereich des Parkplatzes 105 bewegen, um den Bereich des Parkplatzes 105 zu verlassen. Die Verwaltungseinrichtung 125 kann das Kraftfahrzeug 115 dabei erfassen und eine Aktion auslösen, die beispielsweise die Dokumentation des Entfernungsvorgangs oder die Verhinderung des vollständigen Entfernens des Kraftfahrzeugs 115 vom Bereich des Parkplatzes 105 zum Ziel haben kann. In letztgenanntem Fall kann insbesondere eine physische Sperre 160 im Bereich des Parkplatzes 105 aktiviert werden. Die Sperre 160 kann eine Schranke, ein Tor oder ein sonstiges bewegliches Hindernis umfassen.

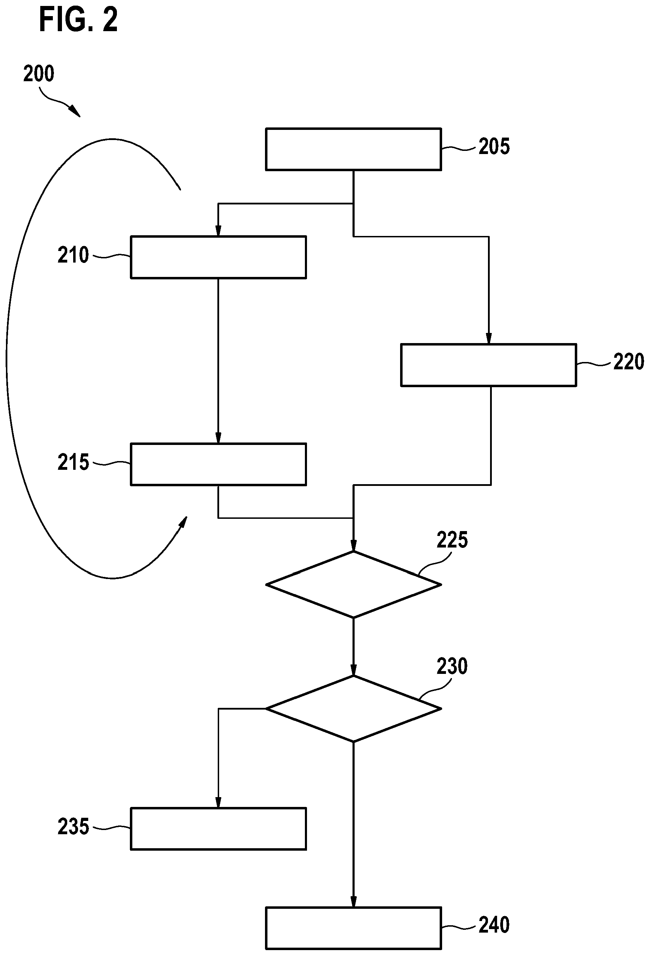

Figur 2 zeigt ein Ablaufdiagramm eines Verfahrens 200 zum Sichern des Kraftfahrzeugs 115 auf dem Parkplatz 105 von Figur 1.

In einem üblichen AVP-Ablauf wird eine Überführung eines Kraftfahrzeugs 115 zwischen der Übergabestelle 145 und einem Stellplatz 110 üblicherweise in einem Schritt 205 vorbereitet. Dann wird das Kraftfahrzeug 115 auf der Strecke 150 gesteuert, wobei seitens der Infrastruktur des Parkplatzes 105, insbesondere der Verwaltungseinrichtung 125, in einem Schritt 210 ein Bereich des Parkplatzes 105 abgetastet und in einem nachfolgenden Schritt 215 das Kraftfahrzeug 115 erfasst wird. Informationen, die im Schritt 210 abgetastet wurden, können zusätzlich abgespeichert werden. Insbesondere können Informationen in einem vorbestimmten, zurückliegenden Zeitfenster zur späteren Verwendung abgespeichert werden.

Üblicherweise erfolgt parallel zu den Schritten 210 und 215 eine Kommunikation 220 mit dem Kraftfahrzeug 115, um die Steuerung auf der Strecke 150 zu verbessern. Die Schritte 210 bis 220 laufen üblicherweise in einer Schleife wiederkehrend ab, wobei die Schritte 210 und 215 einerseits und der Schritt 220 andererseits synchronisiert oder nebenläufig ausgeführt sein können.

Die Schritte 205 bis 220 sind üblicherweise von einem AVP-Vorgang umfasst, können jedoch wenigstens teilweise verwendet werden, um ein Kraftfahrzeug 115 gegen unbefugtes Entfernen vom Bereich des Parkplatzes 105 zu sichern. Insbesondere können Erkenntnisse aus den Schritten 210 und 215 verwendet werden, um ein Kraftfahrzeug 115 zu bestimmen, das außerhalb eines AVP-Vorgangs im Bereich des Parkplatzes 105 unterwegs ist. Da die Steuerung des Kraftfahrzeugs 115 auf der Strecke 150 im Rahmen eines AVP-Vorgangs üblicherweise durch die Verwaltungseinrichtung 125 unterstützt wird, kann in einem Schritt 225 leicht entschieden werden, ob ein sich im Bereich des Parkplatzes 105 bewegendes Kraftfahrzeug 115 außerhalb eines AVP-Vorgangs unterwegs ist. Mit dem Schritt 225 verbunden ist üblicherweise eine fahrerunabhängige Steuerung des Kraftfahrzeugs 115 auf dem Parkplatz 110. Diese Funktion ist in Figur 2 nicht näher dargestellt.

Wurde bestimmt, dass das Kraftfahrzeug 115 außerhalb eines AVP-Vorgangs auf dem Parkplatz 110 unterwegs ist, so kann optional in einem Schritt 230 eine Rückfrage bei einer zuständigen oder verantwortlichen Person eingeholt werden. Verläuft diese Rückfrage positiv, bestätigt also die Person, dass das Kraftfahrzeug 115 vom Bereich des Parkplatzes 105 entfernt werden darf, so kann das Verfahren 200 in einem Schritt 235 enden. So kann etwa ein Fahrer, der sein Kraftfahrzeug vorzeitig vom Parkplatz 110 abholt, sich als berechtigt ausweisen, sodass keine Aktion ausgelöst wird. Andernfalls oder wenn eine Zustimmung der zuständigen Person im Schritt 230 über länger als eine vorbestimmte Zeitspanne ausbleibt, können in einem Schritt 240 eine oder mehrere Aktionen veranlasst werden. Diese Aktionen können zum Ziel haben, das endgültige Entfernen des Kraftfahrzeugs 115 aus dem Bereich des Parkplatzes 105 physisch zu verhindern, den Entfernvorgang zu dokumentieren oder einen Hinweis an eine zuständige Person auszugeben. Bei der Dokumentation oder dem Hinweis kann insbesondere auf die im Schritt 210 abgespeicherten Informationen zurückgegriffen werden.

## Patentansprüche

1. Verfahren (200) zum Sichern eines Kraftfahrzeugs (115) gegen unbefugtes Entfernen von einem AVP-Parkplatz (105), wobei der Parkplatz (105) dazu eingerichtet ist, ein fahrerunabhängiges Führen des Kraftfahrzeugs (115) zwischen einer Übergabestelle (145) und einem Stellplatz (110) im Rahmen des fahrerunabhängigen Abstell- oder Abholvorgangs zu unterstützen, wobei das Verfahren (200) folgende Schritte umfasst:
- Abtasten (210) des Parkplatzes (105) mittels Sensoren (155);
- Bestimmen (215), dass das Kraftfahrzeug (115) im Bereich des Parkplatzes (105) unterwegs ist;
- Bestimmen (225), dass das Kraftfahrzeug (115) außerhalb eines fahrerunabhängig gesteuerten Abstell- oder Abholvorgangs fährt, und
- Auslösen (240) einer Aktion, wobei die Aktion das Erfassen (230) einer Bestätigung einer für das Kraftfahrzeug (115) oder den Parkplatz (105) zuständigen Person umfasst.

2. Verfahren (200) nach Anspruch 1, wobei die Aktion das Errichten (240) einer physischen Sperre (160) gegen Verlassen des Parkplatzes (105) durch das Kraftfahrzeug (115) umfasst.

3. Verfahren (200) nach einem der vorangehenden Ansprüche, wobei die Aktion das Ausgeben (240) einer Nachricht umfasst.

4. Verfahren (200) nach Anspruch 3, wobei im Bereich des Parkplatzes (105) zusätzliche Informationen erfasst (210) und über einen vorbestimmten zurückliegenden Zeitraum aufgezeichnet werden und wobei die Nachricht die zusätzlichen Informationen umfasst.

5. Verfahren (200) nach Anspruch 4, wobei die Informationen eines von einem Kamerabild, einer Bildersequenz, einem Datum, einer Uhrzeit und Reservierungsinformationen zur Benutzung des Stellplatzes umfassen.

6. Computerprogrammprodukt mit Programmcodemitteln zur Durchführung des Verfahrens (200) nach einem der vorangehenden Ansprüche, wenn das Computerprogrammprodukt auf einer Verarbeitungseinrichtung (130) abläuft oder auf einem computerlesbaren Datenträger gespeichert ist.

7. Parksystem (100), umfassend:
- einen Parkplatz (105) mit wenigstens einem Stellplatz (110) zum Abstellen eines Kraftfahrzeugs (115), wobei der Parkplatz (105) dazu eingerichtet ist, ein fahrerunabhängiges Führen des Kraftfahrzeugs (115) zwischen einer Übergabestelle (145) und einem Stellplatz (110) im Rahmen des fahrerunabhängigen Abstell- oder Abholvorgangs zu unterstützen;
- Sensoren (155) zur Abtastung des Parkplatzes (105); und
- eine Verarbeitungseinrichtung (130) zur Unterstützung eines fahrerunabhängigen Abstell- oder Abholvorgangs des Kraftfahrzeugs (115);
- wobei die Verarbeitungseinrichtung (130) dazu eingerichtet ist, zu bestimmen, dass ein mittels der Sensoren (155) auf dem Parkplatz (105) erfasstes Kraftfahrzeug (115) außerhalb eines fahrerunabhängig gesteuerten Abstell- oder Abholvorgangs fährt,
- und daraufhin eine Aktion (240) auszulösen, wobei die Aktion das Erfassen (230) einer Bestätigung einer für das Kraftfahrzeug (115) oder den Parkplatz (105) zuständigen Person umfasst.

## Claims

1. Method (200) for securing a motor vehicle (115) against unauthorized removal from an AVP (automatic valet parking) carpark (105), wherein the carpark (105) is configured to assist driving of the motor vehicle (115) independently of the driver between a delivery point (145) and a parking position (110) within the scope of the parking process or pick-up process which is independent of the driver, wherein the method (200) comprises the following steps:
- scanning (210) the carpark (105) by means of sensors (155);
- determining (215) that the motor vehicle (115) is traveling within the area of the carpark (105);
- determining (225) that the motor vehicle (115) is driving outside a parking process or pick-up process which is controlled independently of the driver, and
- triggering (240) an action, wherein the action comprises registering (230) confirmation by a person who is responsible for the motor vehicle (115) or the carpark (105).

2. Method (200) according to Claim 1, wherein the action comprises setting up (240) a physical barrier (160) preventing exiting of the carpark (105) by the motor vehicle (115).

3. Method (200) according to one of the preceding claims, wherein the action comprises outputting (240) a message.

4. Method (200) according to Claim 3, wherein additional information (210) is acquired in the area of the carpark (105) and is recorded over a predetermined, preceding time period, and wherein the message comprises the additional information.

5. Method (200) according to Claim 4, wherein the information comprise one of a camera image, an image sequence, a data item, a time and reservation information relating to the use of the parking space.

6. Computer program product having program code means for carrying out the method (200) according to one of the preceding claims when the computer program product runs on a processing device (130) or is stored on a computer-readable data carrier.

7. Parking system (100) comprising:
- a carpark (105) with at least one parking place (110) for parking a motor vehicle (115), wherein the carpark (105) is configured to assist driving of the vehicle (115) independently of the driver between a delivery point (145) and a parking place (110) within the scope of the parking process or pick-up process which is independent of the driver;
- sensors (155) for scanning the carpark (105); and
- a processing device (130) for assisting a parking process or pick-up process, which is independent of the driver, of the motor vehicle (115);
- wherein the processing device (130) is configured to determine that a motor vehicle (115) which is sensed by means of the sensors (155) in the carpark (105) is driving outside a parking process or pick-up process which is controlled independently of the driver,
- and subsequently to trigger an action (240), wherein the action comprises the sensing (230) of a confirmation by a person who is responsible for the motor vehicle (115) or the carpark (105).

## Revendications

1. Procédé (200) destiné à sécuriser un véhicule à moteur (115) afin de l'empêcher de quitter de manière non autorisée un parc de stationnement AVP (105), dans lequel le parc de stationnement (105) est conçu pour prendre en charge une conduite autonome du véhicule à moteur (115) entre un point de transfert (145) et un emplacement de stationnement (110) dans le cadre du processus autonome de stationnement ou de récupération, le procédé (200) comprenant les étapes suivantes :
- analyser (210) le parc de stationnement (105) au moyen de capteurs (155) ;
- déterminer (215) que le véhicule à moteur (115) se déplace dans la zone du parc de stationnement (105) ;
- déterminer (225) que le véhicule à moteur (115) se déplace indépendamment d'un processus de stationnement ou de récupération commandé de manière autonome, et
- déclencher (240) une action, l'action consistant à détecter (230) une confirmation provenant d'une personne responsable du véhicule à moteur (115) ou du parc de stationnement (105).

2. Procédé (200) selon la revendication 1, dans lequel l'action consiste à établir (240) une barrière physique (160) empêchant le véhicule à moteur (115) de quitter le parc de stationnement (105).

3. Procédé (200) selon l'une des revendications précédentes, dans lequel l'action consiste à émettre (240) un message.

4. Procédé (200) selon la revendication 3, dans lequel des informations supplémentaires sont acquises (210) dans la zone du parc de stationnement (105) et enregistrées au cours d'une période antérieure prédéterminée et dans lequel le message comprend les informations supplémentaires.

5. Procédé (200) selon la revendication 4, dans lequel les informations comprennent l'une d'une image de caméra, d'une séquence d'images, d'une date, d'une heure et d'informations de réservation pour l'utilisation de l'emplacement de stationnement.

6. Produit de programme d'ordinateur comportant des moyens à code de programme destinés à mettre en œuvre le procédé (200) selon l'une des revendications précédentes lorsque le produit de programme d'ordinateur est exécuté sur un dispositif de traitement (130) ou est stocké sur un support de données lisible par ordinateur.

7. Système de stationnement (100), comprenant :
- un parc de stationnement (105) comportant au moins un emplacement de stationnement (110) pour le stationnement d'un véhicule à moteur (115), dans lequel le parc de stationnement (105) est conçu pour prendre en charge une conduite autonome du véhicule à moteur (115) entre un point de transfert (145) et un emplacement de stationnement (110) dans le cadre du processus autonome de stationnement ou de récupération ;
- des capteurs (155) destinés à analyser le parc de stationnement (105) ; et
- un dispositif de traitement (130) destiné à prendre en charge un processus autonome de stationnement ou de récupération du véhicule à moteur (115) ;
- dans lequel le dispositif de traitement (130) est conçu pour déterminer qu'un véhicule à moteur (115) détecté au moyen des capteurs (155) dans le parc de stationnement (105) se déplace indépendamment d'un processus de stationnement ou de récupération commandé de manière autonome,
- et déclencher -alors une action (240), l'action consistant à détecter (230) une confirmation provenant d'une personne responsable du véhicule à moteur (115) ou du parc de stationnement (105).
